# EUROPEAN PATENT APPLICATION

(11) **EP 2 224 066 A1**
(43) Date of publication of application: **01.09.2010**
(21) Application number: 09447002.8
(22) Date of filing: 25.02.2009
(51) Int. Cl.: E03C 1/122

(54) **Air admittance valve**

(71) Applicant: Studor S.A., 1150 Luxembourg (LU)
(72) Inventor: Ericson, Kurt Sture Birger, 2970 Schilde (BE); Low, Han Sin, Selangor 47000 (MY)
(74) Representative: Overath, Philippe

(57) **Abstract**

The closing and sealing means for use in air admittance valves comprising a valve housing (10) designed to be connected to the waste water pipe system, an upper cap (14) and valve closing and sealing means consisting of a fixed valve seat (22) and a movable closing member (24). The housing includes at least one passageway (16) in communication with the surrounding atmospheric air, and at least one passageway (18) in connection with the inner space (19) of the sewage system, each of said passageways being in contact with the movable closing member (24).

The closing means comprise a rigid movable closing member in the shape of a poppet valve (40) having at its periphery, an inverse angled cone surface (44) extending upwards designed to cooperate with the sealing means consisting of a fixed valve seat (22) having an upper edge provided with a soft annular seat (50) presenting a thin annular cantilever lip (52) extending towards the centre of the seat.

## Description

### Field of the invention

This invention is relating to closing and sealing means for use in air admittance valves connected to a sanitary waste pipe system in order to protect the water traps in the system and to prevent communication between the air contained in waste pipes or sewers systems with surrounding atmosphere, said valve opens automatically to admit atmospheric air into the pipe system upon a sudden pressure drop or under-pressure peak within said pipe system.

By closing and sealing means it is to be understood, on the one hand, the movable closing member or membrane and, on the other hand, the fixed valve seat, co-operating with said closing member in a sealed off position of the valve.

A building drainage and vent system involves, in normal operating conditions, the establishment of an induced air flow within the vertical stacks of the system due to the unsteady water downfall generated by any sanitary appliance discharge. In order to protect the habitable space against contaminated odours, each appliance is normally protected by a water trap seal. Variation due to water downfall within the drainage system, generates occasional variations in air pressure (positive and/or negative) that are often capable of disturbing these water trap seals either by siphonage due to a sudden under-pressure in the system or as a result of back pressures following air path closures by water surcharge.

### Description of the prior art

Air admittance valves have been introduced to avoid said inconveniences and also offers the possibility of avoiding the necessity to vent the waste pipe system outside the roof of the building as said valves only open in response to sub-atmospheric pressure conditions in the waste pipe system.

Said valves are designed to assure a maximum possible air inlet flow from the air inlet of the valve to the waste pipe system while passing through the temporary opened valve membrane.

Distinction is to be made between two major categories of air admittance valves; the first category comprising an annular closing member resting on two co-axial circular seats and the second category comprising a spherical or circular closing member resting on a corresponding peripheral seat.

One of the first automatic air admittance valves is disclosed in document BE 831.833.

A more recent patent document US 4.232.706, in the name of the applicant, discloses an automatic valve device in which a vertical tube, constituting the body of the valve, comprises at its upper end a constriction in the form of a Venturi which co-operates with a cover so as to form a peripheral air inlet provided with an annular valve member situated at the exterior of the constriction and which can be tilted when a negative pressure occurs in the pipes while permitting the fresh air to penetrate into the vertical waste water pipe and which, when the pressure is equilibrated or when there is overpressure, occupies a closed position in which the escape of contaminated air is prevented. Said valve comprises an annular peripheral opening which distributes the air inlet, in case of lifting of the annular valve member, towards the vertical tube in connection with the waste pipe.

In valves of this kind, the circular or annular valve member is generally resting on two concentric valve seats having each a circular sealing surface. In case of deformation or distortion of the valve member, problems could occur with the necessary airtight closure of said valve member with at least one of the two sealing surfaces.

Document EP 0 409 506 discloses a valve device for admitting air to a pipe, comprising a body adapted to be mounted on the pipe, a chamber in the upper part of the body provided with at least one first passageway to the inner space of the pipe, a central circular closing member and a second passage way within the body for communication between the surrounding air and the chamber when the closing member is lifted. Said closing member being generally guided by guiding means such as a central rod. The sealing between the movable closing member and the seal has been realized either with an O-ring provided on the seal surface or a rubber disc provided on the closing member.

Document EP 1 650 363 disclosed an air admittance valve having basically the same structure as the above mentioned device. The seal element comprises an elastomer seal membrane maintained by an upper and a lower membrane support. The seal membrane rests on a sealing lip of the air inlet wall when the valve is in sealing position.

The manufacture of the closing member or membrane in known devices is generally complicated and expensive because it is made out of several elements of different composition, i.e. rigid and/or flexible material. Another major drawback of the existing air admittance valves is the accuracy of the sealing capacity between the closing member or membrane and the sealing surface or valve seat. Indeed, said sealing surface is mostly rigid or includes a fixed sealing ring (O-ring). Small variations in the flatness of the closing member and/or of the sealing surface, due to thermal or material deformations, may occur causing possible leakage's and release of contaminated air from the sewage system towards the surrounding atmosphere.

### Summary of the invention

It is an object of the invention to provide an improved air admittance valve which is very simple and easy to manufacture while providing improved sealing capacities and sealing reliability.

The above objects are achieved in accordance with the characteristics of the present invention which are described more particularly in the annexed set of claims.

More details, advantages and features of the invention will appear from the following description of an embodiment of the valve according to the invention and in which reference is made to drawings in which :

### Description of the drawings

Figure 1 : is cross sectional view of a valve housing provided with sealing means according to the invention, showing the passageways towards the surrounding atmosphere;
Figure 2 is an enlarged view of detail A in figure 1 with the closing member in closed or sealed position;
Figure 3 : is a cross sectional view of the same valve housing but taken in a plane perpendicular to one in figure 1, showing the passageways towards the inner space of the sewage system;
Figure 4 : is an enlarged view of detail B in figure 3 with the closing member in open or lifted position;
Figure 5 : is a partial sectional view identical to figure 3, showing some alternative constructional features;
Figure 6 : is a sectional view along the line C-C in the figure 5 showing an example of the valve guiding means;
Figure 7: is a detailed cross section of the poppet valve according to the invention.

### Description of the preferred embodiments

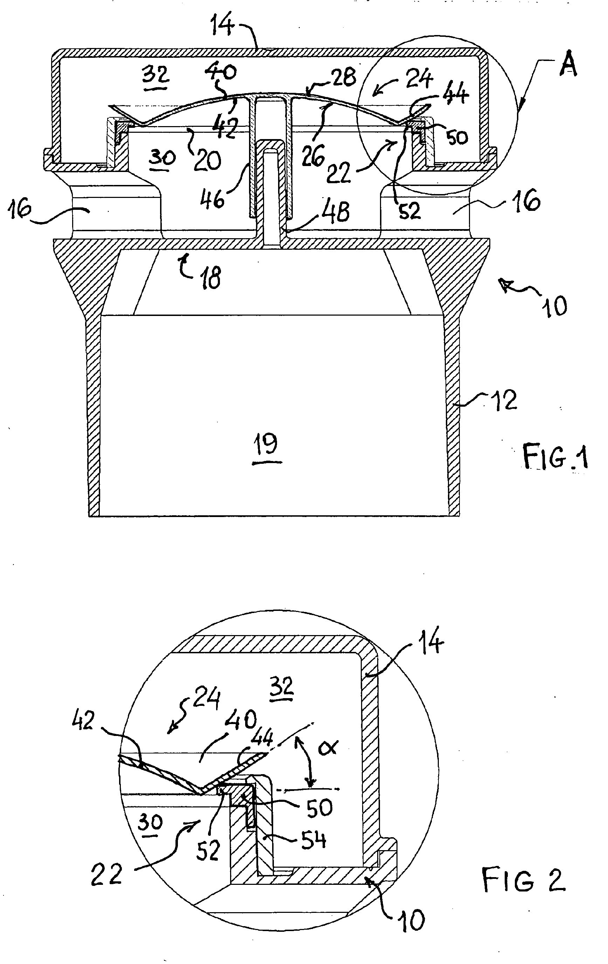

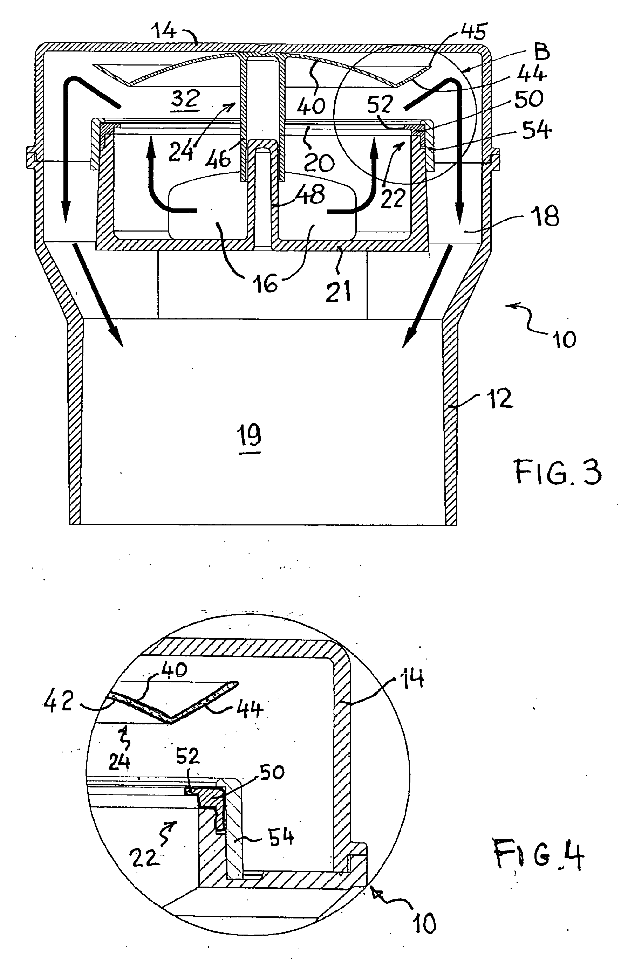

As shown in figures 1 and 3, the valve comprises a classical air admittance valve housing 10 having a lower part comprising a vertical tubular member 12, with inner space 19, adapted to be connected to a vertical stack of a sanitary waste pipe (not shown) being part of a sewage system.

The upper part of the housing 10 is closed off with a cap or cover 14. Between the cover 14 and the tubular member 12, the housing is commonly provided with, on the one hand, passageways 16 towards the surrounding atmosphere and on the other hand, passageways 18 (Fig. 3) towards the inner space 19 of the tubular member 12 and consequently to the sewage system.

The passageways 16 and 18 are connected to each other by means of a central circular opening 20, the upper edge of which represents the fixed sealing member 22 designed to co-operate with a movable closing member 24.

The lower surface 26 of the movable closing member 24 is in contact with the space 30 in connection with the passageways 16 towards the surrounding atmosphere and the upper surface 28 of the movable closing member 24 is in contact with the space 32 within the upper cap 14 which is in connection with the passageways 18 towards the inner space 19 of the tubular member 12.

The passageways 16 and the inner space 30 is closed off from the inner space 19 of the tubular member 12 by means of a closing wall 21, part of the valve housing 10.

According to the invention, the movable closing member 24 is designed in the shape of a circular poppet valve 40 provided with a bowl shaped central part 42 extending upwards and a peripheral collar designed with an inverse angled cone surface 44, extending upwards towards an upper edge 45, under an angle α (Figure 2). Such angle could be between 20° and 45°, and preferably about 30°.

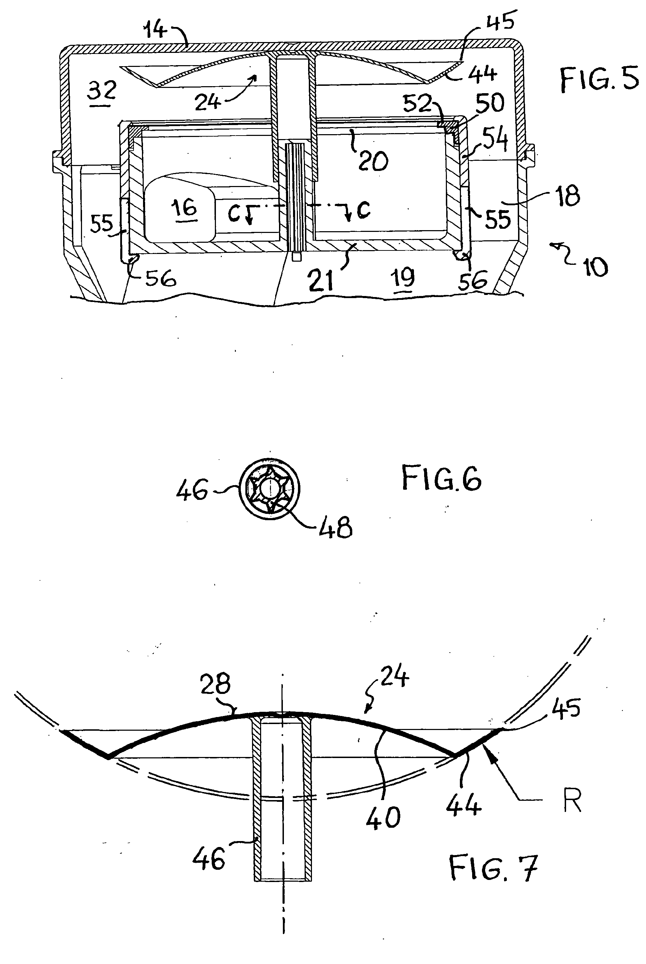

In order to improve the lifting force of the circular poppet valve 40, the inverse angled cone surface 44 of the valve is slightly curved following a circle with a radius R. Said radius R equals about the diameter of the valve seat opening 20 (see figure 7).

Preferably, the horizontal level of the centre of the central part 42 will be situated in a higher position than the level of the upper edge 45 of the inverse angled cone surface 44.

The lower surface of the bowl shaped inner part 42 is provided , in its centre, with a tubular extension 46, designed to co-operate as a guiding means with a stem 48 rigidly connected to the wall 21 of the valve housing 10. According to a preferred embodiment, the stem 48 is provided with a star shaped outer surface (as shown on the figure 6) so as to minimise the friction between the tubular extension 46 and the stem 48 and to avoid the poppet valve 40 to get stuck about the stem.

The poppet valve 40 can be manufactured in any suitable rigid plastic material such as polypropylene (PP) or ABS.

Also according to the present invention, the upper edge 22 of the central opening 20 is provided with a soft annular seat 50 having a thin annular cantilever platform or lip 52 extending towards the centre of the opening 20.

The soft annular seat 50 with cantilever lip 52 can be manufactured in any suitable rubber material such as nitril butadiene rubber (NBR) and is clamped to the valve seat 22 of the valve housing 10 by means of a rigid ring 54.

In view of firmly securing the soft annular seat 50 onto the upper edge 22 of the central opening 20, the rigid ring 54 may be provided with flexible fingers 55 extending downwards and provided, at their lower extremity, with a latch 56 designed to grip onto the lower surface of the closing wall 21 of the valve housing 10.

In a normal closed position (Fig. 1 and 2) the poppet valve 40 is resting freely with its inverse angled cone surface 44 against the cantilever lip 52 of the soft annular seat 50 providing a secure sealing surface in normal (balanced) air pressure conditions.

In case of sudden negative pressure inside the sewage system, and as shown in figures 3 and 4, the atmospheric air pressure will lift up the poppet valve 40 and atmospheric air will be instantaneously introduced into the sewage pipes. Upon equilibration of the air pressure within the sewage system, the poppet valve 40 will resume its closing position by gravity against the cantilever lip 52.

During the lifting up of the movable closing member 24, the inverse poppet valve 40 will be guided by means of the tubular extension 46 moving over the fixed stem 48 and dislodging will be prevented by abutment of the central upper portion 28 of the bowl shaped poppet valve 40 against the lower surface of the upper cap 14 of the valve housing 10.

In case of overpressure within the sewage system, the air contained in the inner space 19, the passageways 18 and the upper space 32 will push against the upper surface 28 of the poppet valve 40 causing the inverse angled cone surface 44 to press firmly against the cantilever lip 52 deforming it downwards while enlarging the sealing surface due to the inverse angled cone surface 44. In doing this, it becomes clear that, the greater the overpressure is, the greater the sealing surface will be providing increased sealing properties against overpressure in the sewage system.

From the above description of the invention, it becomes clear that major improvements have been achieved with respect to the existing state of the art closing and sealing elements within air admittance valves for use in sewage systems.

The main advantages of the present invention versus the known sealing means would be the easy to manufacture shape and components of the closing and sealing elements while providing improved closing accuracy and sealing capacity of the air admittance valve in any possible circumstances of air pressure within the sewage system.

The purpose of the embodiments described herewith is only to illustrate the invention while still other variations are possible without falling out of the scope of the invention as expressed in the following claims.

Legend of the reference numerals
- 10 :: air admittance valve housing
- 12 :: tubular member
- 14 :: upper cap of the housing
- 16 :: passageway towards surrounding atmosphere
- 18 :: passageway towards the inner space of sewage system
- 19 :: inner space of tubular member 12
- 20 :: central circular opening
- 21 :: closing wall of the housing 10
- 22 :: fixed sealing member
- 24 :: movable closing member
- 26 :: lower surface of the closing member
- 28 :: upper surface of the closing member
- 30 :: inner valve space connected with passageways 16
- 32 :: space within cap 14 connected with passageways 18
- 40 :: inverse poppet valve
- 42 :: lower part of poppet valve
- 44 :: inverse angled cone surface
- 45 :: upper edge
- 46 :: tubular extension
- 48 :: fixed vertical stem
- 50 :: annular soft seat
- 52 :: cantilever lip
- 54 :: rigid ring
- 55 :: fingers
- 56 :: latches

## Claims

1. Closing and sealing means for an air admittance valve to be connected to a sanitary waste pipe system for admitting atmospheric air into the waste pipe system towards the valve sealing means in response to a sudden pressure reduction in the system in order to protect the water traps in the system and to prevent discharge of contaminated air from the system to the atmosphere, the valve consisting of a valve body (10) having
- a vertical tubular member (12) adapted to be connected to the waste water pipe system and having an inner space (19),
- a cover or cap (14) at the upper end of the housing and having an inner space (32);
- a valve opening (20) and valve sealing means (22, 24) situated between the tubular member (12) and the cover (14), said valve sealing means (22, 24) comprising a fixed valve seat (22) at the periphery of the valve opening (20) adapted to co-operate with a movable closing member (24);
- at least one passageway (16) from the inner space (30) of the housing (10) towards the surrounding atmosphere;
- at least one passageway (18) from the inner space (32) within the housing (10) towards the inner space (19) of the waste water pipe system;
- said passageways being respectively in contact with either the upper surface or the lower surface of the movable closing member (24) so as to lift said closing member (24) upon a sudden loss of air pressure in the waste water pipe system allowing fresh air to enter into the system via the passageway (16) in order to balance the air pressure inside the sewage system, **characterised in that**
the closing means comprise a rigid movable closing member in the shape of a poppet valve (40) and **in that** the sealing means, at the upper edge of the valve seat (22), are provided with an soft annular seat (50).

2. Closing and sealing means, according to claim 1, **characterised in that** the poppet valve (40) has a circular shape and is provided with a conical peripheral collar having an inverse angled cone surface (44) extending upwards under an angle α.

3. Closing and sealing means, according to claim 2, **characterised in that** the circular poppet valve (40) is provided with a bowl shaped inner part (42) the upper centre area (28) of which extending at a horizontal level which is higher than the level of the upper peripheral edge of the inverse angled cone surface (44).

4. Closing and sealing means, according to claims 2 and 3, **characterised in that** the lower surface of the bowl shaped inner part (42) is provided in its centre with a tubular extension (46) designed to co-operate with a vertical stem (48), rigidly connected to a wall (21) part of the valve housing (10), for guiding purposes.

5. Closing and sealing means, according to claim 4, **characterised in that** the vertical stem (48) is provided with a star shaped outer surface (seen in cross section) in order to reduce friction between the tubular extension (46) of the poppet valve (40) and the outer surface of the vertical stem (48).

6. Closing and sealing means, according to claim 2, **characterised in that** the inverse angled cone surface of the peripheral edge is extending upwards under an angle between 20° and 45°.

7. Closing and sealing means, according to claim 2, **characterised in that** the inverse angled cone surface (44) of the peripheral edge is extending upwards under an angle of about 30°.

8. Closing and sealing means, according to claim 2, **characterised in that** the inverse angled cone surface (44) of the peripheral edge is extending upwards following a curved circle with a radius (R).

9. Closing and sealing means, according to claim 8, **characterised in that** the radius (R) of the curved circle of the inverse angled cone surface (44) equals about the diameter of the valve seat opening (20).

10. Closing and sealing means, according to claim 2, **characterised in that** the circular poppet valve (40) is manufactured in a rigid plastic material.

11. Closing and sealing means, according to claim 10, **characterised in that** the circular poppet valve (40) is manufactured in a material such as polypropylene (PP) or acrilonitrile-butadienestyrene (ABS).

12. Closing and sealing means, according to claim 1, **characterised in that** the upper edge of the valve seat (22) is provided with a soft annular seat (50) having a thin annular cantilever platform or lip (52) extending towards the centre of the seat opening (20).

13. Closing and sealing means, according to claim 12, **characterised in that** the soft annular seat (50) is manufactured in a rubber material.

14. Closing and sealing means, according to claim 13, **characterised in that** the soft annular seat (50) is manufactured in a material such as nitril butadiene rubber (NBR).

15. Closing and sealing means, according to claim 12, **characterised in that** the soft annular seat (50) is clamped towards the upper edge of the valve seat (22) by means of a rigid ring (54) fixed onto the valve housing (10).

16. Closing and sealing means, according to claim 15, **characterised in that** the rigid ring (54) is clamped onto the lower side of the closing wall (21) of the valve housing (10) by means of a set of resilient latches (56) provided at the lower extremity of fingers (55), extending downwards from the ring (54).

17. Method for closing and sealing off an air admittance valve connected to a sanitary waste pipe system comprising a movable closing member in the shape of a poppet valve (40) and a fixed valve seat (22) having a soft upper edge (50) according to the claims 1 to 11, **characterised in that** the movable poppet valve (40) is:
- resting in normal position on the seat (22) during balanced air pressure conditions within the sewage pipe system,
- lifted from the seat (22) in case of negative pressure in the sewage pipe system whereby the lifting force is improved by the shape of the inverse angled cone surface (44) of the valve and that the upwards movement of the poppet valve (40) is limited due to the abutment of the central upper portion of the bowl shaped portion of the valve against the lower surface of the cover (14) of the valve housing (10);
- pressed downwards onto the soft cantilever edge of the seat (50) so as to bend it down, in order to increase the sealing surface between the movable poppet valve (40) and the fixed seat (50) in case of overpressure within the sewage system.
